# EUROPEAN PATENT APPLICATION

(11) **EP 1 598 764 A1**
(43) Date of publication of application: **23.11.2005**
(21) Application number: 05103921.2
(22) Date of filing: 11.05.2005
(51) Int. Cl.: G06F 17/60

(54) **A method of maintaining the operational capability of a technical installation**

(30) Priority: 20.05.2004 US 572908; 05.08.2004 US 599106; 28.10.2004 US 977657
(71) Applicant: SIEMENS AKTIENGESELLSCHAFT, 80333 München (DE)
(72) Inventor: Drogan, Hartmut, 15711, Zeesen (DE); Janz, Dirk, 13156, Berlin (DE); Misback, Robert, Gibsonia, PA 15044 (US); Rindler, Michael, 15566, Schöneiche (DE)

(57) **Abstract**

The present invention provides an efficient and simple method of maintaining the operational capability of an industrial turbine owned by a customer, the method comprising:
- furnishing at least one component of the industrial turbine under the condition that the furnished component is owned by the maintenance provider and will remain with the maintenance provider upon separation from the industrial turbine, and
- removing the furnished component from the industrial turbine and providing the removed component to the maintenance provider after an agreed maintenance cycle.

## Description

### Field of the Invention

The present invention relates in general to a method of maintaining the operational capability of a technical installation and more specifically to a method of maintaining the operational capability of a turbine for electric power generation by furnishing substitute components for worn components.

### Background of the Invention

In today's modern industries, there is a need for modern technical installations to execute a variety of tasks. For example, power generation industry uses sophisticated turbines, generators and power transmission equipment to generate and transmit electricity power.
To achieve a high rotational speed, power output and efficiency of the turbines, vanes and blades are used to direct a fuel flow, especially of a fuel gas, as desired. The vanes and blades, especially of gas and steam turbines with a high power rating, are exposed to extreme atmospheric conditions such as high temperature and/or other abrasive and stress causing influences and thus need regular inspection to determine a need for refurbishment or replacement of affected vanes and blades.
There is a plurality of other turbine components affected by wear such as turbine bearings, turbine valves, turbine pipes and transistors, heat shields and bricks of the turbine's combustion chamber, compressor blades, compressor bearings, compressor valves, compressor pipes, all components arranged within the hot gas path of the turbine and so on.

### Summary of the Invention

The present invention provides a simple and effective method of maintaining the operational capability of a technical installation owned by a customer, the method being conducted by a maintenance provider.

One aspect of the invention thus involves a concept of obligatory returning initially furnished new or refurbished components provided by a maintenance provider to the maintenance provider's sphere after completion of each agreed maintenance cycle; the maintenance provider can for example be the Original Manufacturer of the components (OEM):
- furnishing at least one component of the industrial turbine under the condition that the furnished component is owned by the maintenance provider and will remain with the maintenance provider upon separation from the industrial turbine, and
- removing the furnished component from the industrial turbine and providing the removed component to the maintenance provider after an agreed maintenance cycle.

One maintenance cycle can thus be defined by furnishing new or refurbished components by the maintenance provider as a starting point and removing of the furnished new or refurbished components out of said customer's sphere by the maintenance provider as an end point.

The customer remains fully flexible as to choosing a different maintenance provider after completion of agreed maintenance cycles, but the initially furnished components are returned to the maintenance provider thus creating a closed loop concerning possession of initially furnished components only by the customer (during operation of the technical installation) and the maintenance provider (upon completion of each agreed maintenance cycle).

This closed loop can be part of a lease agreement covering (only) the component (and not the entire turbine) or of an agreement on transferring property in initially furnished new respectively refurbished components to the maintenance provider after each agreed maintenance cycle:
- furnishing at least one component of the industrial turbine under the condition that the furnished component will be returned to the maintenance provider upon separation from the industrial turbine, and
- removing the furnished component from the industrial turbine and providing the removed component to the maintenance provider after an agreed maintenance cycle, wherein the property in the component is transferred to the maintenance provider.

All furnished components which substitute worn components at the beginning of each agreed maintenance cycle will be available after the maintenance cycle only to the maintenance provider who has initially furnished those components.

A further aspect of the present invention thus involves a computer system capable of automatic maintenance service managing, comprising:
- A database including at least one data record related to the industrial turbine wherein the data record includes technical information about the component, and a further data record including information on a maintenance agreement between the customer and a maintenance provider, the maintenance agreement including information about the number of agreed consecutive maintenance cycles and their respective duration, wherein the maintenance agreement further includes a clause that the furnished component is owned by the maintenance provider and will remain with the maintenance provider upon separation from the industrial turbine,
- scheduling means for automatic notification of the maintenance provider of due inspection dates derived from the maintenance agreement and for automatic generation of at least one equipment list which includes information about the number of components scheduled for inspection, wherein a number of components to be manufactured by the maintenance provider in advance of a due inspection date and a number of components to be removed or received by the maintenance provider after any agreed maintenance cycle is derived from the number of components scheduled for inspection, and
- input and output means for accessing the database and the scheduling means.

An advantage of the invention includes a reduced inventory at the customer's side because of the maintenance provider's obligation to furnish all necessary components covered by the maintenance agreement during all agreed maintenance cycles.

This also results in a significant decrease of delivery time for components as the maintenance provider is well prepared for a quick delivery because auf the nature of the maintenance agreement.

As a further advantage to the customer, there is no no-warranty gap in time as compared to conventional maintenance agreements where component warranty usually ends after a fixed period of time well before a maintenance cycle ends.

Additionally, the customer has to deal only with one supply interface represented by the maintenance provider as the latter furnishes both refurbished (repaired) and new components.

All in all, the customer thus benefits from an optimized investment over the lifetime of the technical installation, especially if he chooses the maintenance agreement to be continued over a number of consecutive maintenance cycles over the life-time of his industrial turbine. This is mainly because of all risks related to component failures are taken over by the maintenance provider throughout all agreed maintenance cycles.

On the other hand, the maintenance provider benefits from a reliable and calculable service business. The risk of excessive and incalculable warranty obligations can be reduced by closing a number of maintenance agreements with a number of customers so that an average risk applies.

Further aspects, features and advantages of the present invention will become apparent from the drawings and detailed description of the following preferred embodiments.

### Brief Description of the Drawings

The above-mentioned and other concepts of the present invention will now be addressed with reference to the drawings of the preferred embodiments of the present invention. The shown embodiments are intended to illustrate, but not to limit the invention. The drawings contain the following figures, in which like numbers refer to like parts throughout the description and drawings and wherein:
- Figure 1: is a flowchart of an exemplary process of the present invention showing an exemplary series of steps to maintain the operational capability of an industrial turbine owned by a customer;
- Figure 2: is a flowchart of an exemplary alternative process of the present invention;
- Figure 3: is a flowchart of an exemplary process of the present invention realizing at least two consecutive maintenance cycles;
- Figure 4: is a flowchart of an exemplary alternative process of the present invention realizing at least two consecutive maintenance cycles;
- Figure 5: is a schematic diagram illustrating the invention in principle, including a number of consecutive maintenance cycles;
- Figure 6: is a schematic diagram of a computer system adapted to enable an embodiment of the invention.

### Detailed Description of the Preferred Embodiment

### Overview

The disclosed invention advantageously employs one or more base concepts.
One concept is the "closed loop" concept already described above which aims at keeping the furnished new or refurbished components within the sphere of either the customer or the manufacturer.

This is achieved by applying either a leasing agreement covering the property in the components to remain in the manufacturer or an agreement including an obligation to return initially furnished components to the maintenance provider at the end of each agreed maintenance cycle.

Another concept involves granting the customer a warranty and/or charging the customer a flat rate including all necessary repair and replacement expenses related to the furnished components throughout each agreed maintenance cycle in order to enhance the customer's confidence in the maintenance agreement.

This also enables the customer to calculate fixed, for example annular, lump sums for regular maintenance expenses to be included in his business plan thus preventing incalculable financial risks.

Furthermore, at least the first payable flat rate for the first agreed maintenance cycle can be considerably less compared to commonly known service & maintenance agreements, because the customer will not have to pay the full price for furnished components in which he will not be granted unrestricted property.

Subsequent maintenance cycles - which preferably are charged at the same flat rate as the above mentioned first agreed maintenance cycle - can be as expensive or even a little bit more higher priced compared to common service & maintenance agreements, under which only defective components are exchanged for new or refurbished ones, as according to a preferred embodiment of the invention, all components covered under the maintenance agreement are substituted (not only defective ones) by furnished new or refurbished components at the beginning of each agreed maintenance cycle.

This allows the customer for keeping his technical installation on an as-new level, which may contribute to his competitiveness. This aspect of the invention thus provides the customer with a performance guaranty as compared to a simple component warranty.

A further concept includes a number of consecutive maintenance cycles covered by the maintenance agreement so that both customer and maintenance provider benefit from calculable expenses respectively workload.

Another concept includes a computer system which enables the maintenance provider to efficiently organize his service business by providing database and scheduling means preferably accessible over the internet.

All the embodiments to be described in more detail in the following are preferably applied to service & maintenance agreements covering components for industrial turbines for electrical power generation such as turbine vanes, turbine blades, turbine bearings, turbine valves, turbine pipes, combustion chamber heat shields, compressor blades, compressor bearings, compressor valves, compressor pipes and all turbine components arranged within the hot gas path of the turbine.

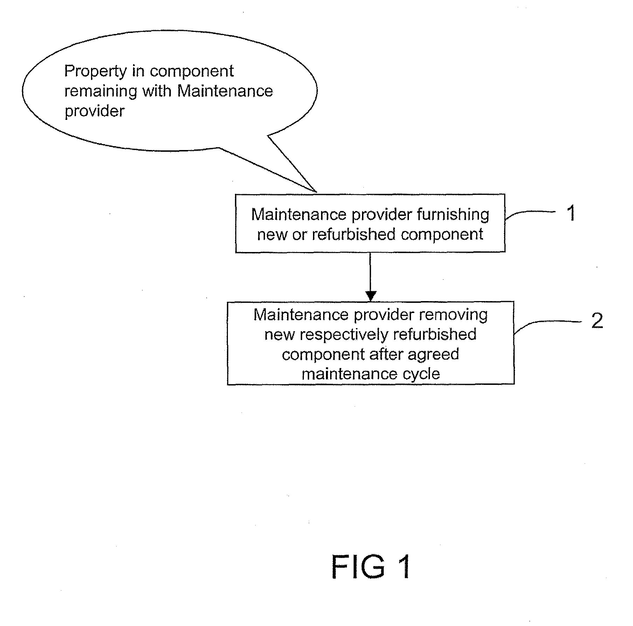

Figure 1 depicts a flowchart showing a series of exemplary steps that can be performed to efficiently maintain the operational capability of a technical installation owned by a customer .

Step 1 provides furnishing at least one new or refurbished component by a maintenance provider wherein property in said component remains with the maintenance provider.

In the following, the customer's technical installation is fit for continued operation, usually throughout an agreed maintenance cycle, the end of which draws attention back to the components being exposed to wear.

Step 2 designates the end of the above mentioned maintenance cycle with said maintenance provider removing said new or refurbished components (furnished in step 1) out of customer's sphere.

The customer may then decide to go with the same maintenance provider for another maintenance cycle or choose another maintenance provider.

The concept described above can be regarded as a kind of lease agreement covering (only) the furnished components (not the entire industrial turbine).

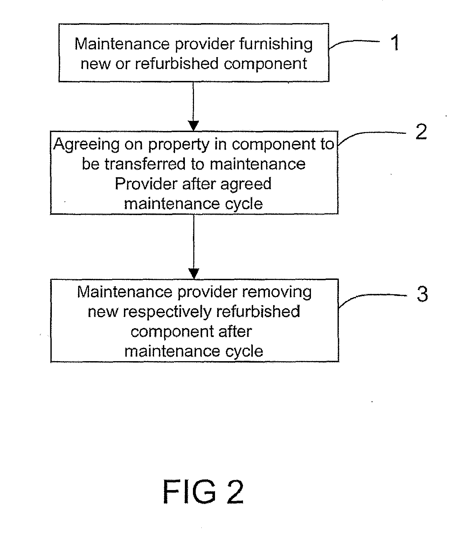

Figure 2 reveals an alternative embodiment of the invention.

Step 1 provides furnishing at least one new or refurbished component by a maintenance provider wherein property in said component remains with the maintenance provider.

Step 2 includes agreeing on the property in said new respectively refurbished component to be transferred to maintenance provider at the end of an agreed maintenance cycle.

Finally, Step 3 provides for removing said furnished new respectively refurbished component out of said customer's sphere by the maintenance provider after said agreed maintenance cycle.

Contrasting the embodiment of figure 1, the property in furnished components is transferred to the maintenance provider only after the end of the agreed maintenance cycle.

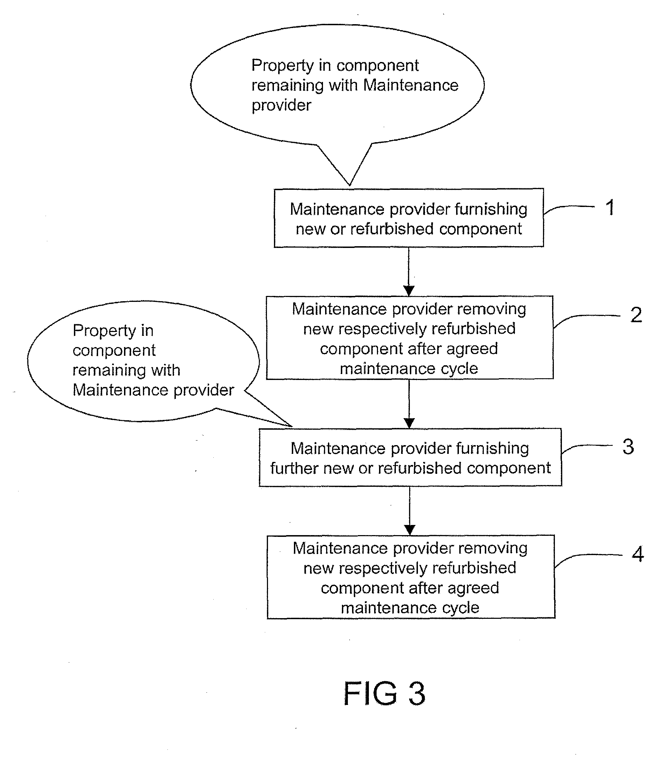

Figure 3 further elaborates the embodiment already described in figure 1 by adding steps 3 and 4 (which are a likewise repetition of steps 1 and 2) to realize at least two consecutive maintenance.

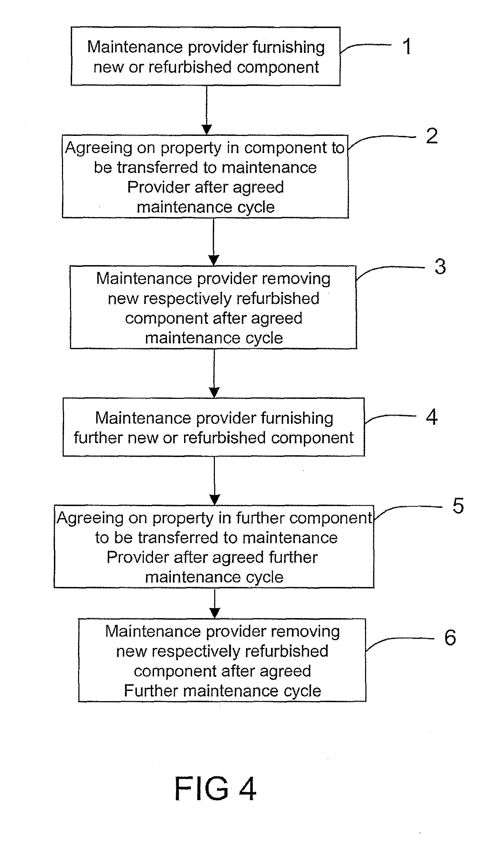

Figure 4 further elaborates the embodiment already described in figure 2 by adding steps 4, 5 and 6 (which actually a likewise repetition of steps 1, 2 and 3) to realize at least two consecutive maintenance cycles employing the invention.

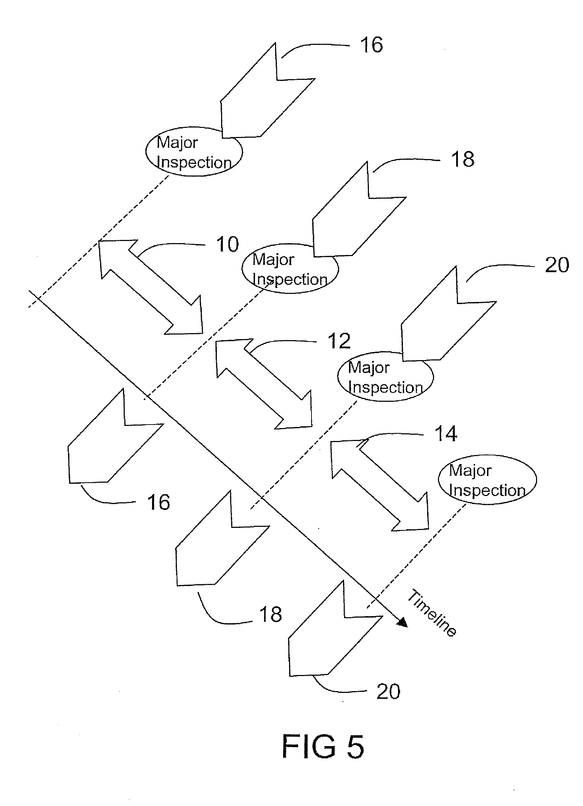

Figure 5 illustrates a schematic diagram including a number of consecutive maintenance cycles 10, 12 and 14.

Each maintenance cycle begins with a major inspection of the industrial turbine, wherein a number of new or refurbished components 16, 18 and 20 are furnished to replace worn components; preferably all components exposed to wear are exchanged with furnished new or refurbished ones at the beginning of each maintenance cycle 10, 12 and 14.

The technical installation is then fit again for continued operation until the end of the respective maintenance cycle 10, 12 or 14.

At the end of each maintenance cycles 10, 12 and 14, the initially furnished components 16, 18 and 20 are removed out of the customer's sphere by the maintenance provider.

After the end of the last agreed maintenance cycle 14, the customer is no longer in possession of any initially furnished component 16, 18 and 20.

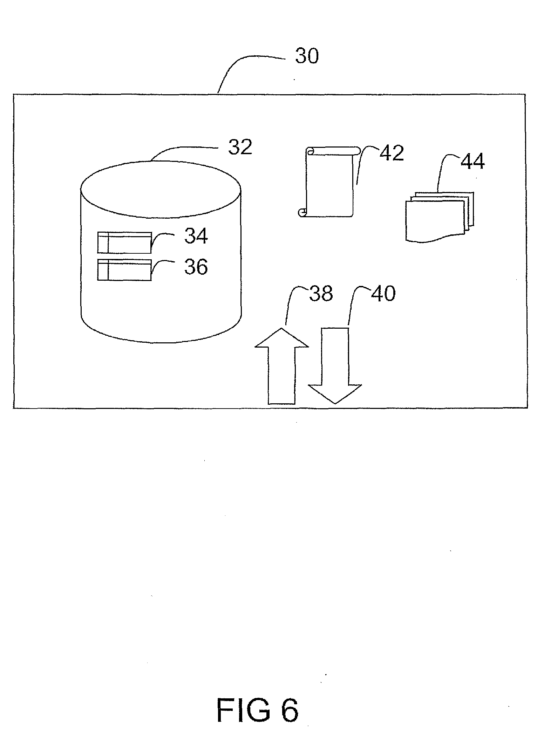

Figure 6 schematically illustrates a computer system 30 which enables the maintenance provider to efficiently organize his service business by providing a database 32 and scheduling means 42 preferably accessible over the internet.

The database 32 includes at least one data record 34 related to said technical installation wherein said data record 34 includes technical information about said at least one component. The database furthermore includes a further data record 36 including information on a maintenance agreement between the customer and a maintenance provider, wherein the maintenance agreement includes information about the numbers of agreed consecutive maintenance cycles and their respective duration.

The maintenance agreement further includes a clause committing the customer to return all components covered by and furnished under the maintenance agreement to the maintenance provider after each agreed maintenance cycle.

The scheduling means 42 are adapted for automatic notification of the maintenance provider of due inspection dates derived from the maintenance agreement and for automatic generation of at least one equipment list 44 including information about the number of components scheduled for inspection, wherein a number of components to be manufactured by said maintenance provider in advance of the inspection and a number of components to be removed by said maintenance provider out of said customer's sphere after each agreed maintenance cycle is derived from the number of components scheduled for inspection.

This allows for an efficient execution of the maintenance provider's service business by employing the invention.

In addition to the embodiments and the aspects of the present invention described above, those of skill in the art will be able to arrive at a variety of other arrangements and steps which, if not explicitly described in this document, nevertheless embody the principles of the invention and fall within the scope of the appended claims.

For example, the ordering of method steps is not necessarily fixed, but may be capable of being modified without departing from the scope and spirit of the present invention.

Furthermore, the use of the invention is not restricted to maintaining the operational capability of industrial turbines; maintenance of any other technical installations with scheduled maintenance intervals and parts repair or exchange requirements may also benefit.

## Claims

1. A method of maintaining the operational capability of an industrial turbine owned by a customer, the method comprising:
furnishing at least one component of the customer-owned industrial turbine under the condition that the furnished component is owned by the maintenance provider and will remain with the maintenance provider upon physical separation from the industrial turbine; and
removing the furnished component from the industrial turbine and providing the removed component to the maintenance provider after an agreed maintenance cycle.

2. The method according to claim 1, further comprising:
furnishing at least one further component of the industrial turbine under the condition that the furnished further component is owned by the maintenance provider and
will remain with the maintenance provider upon separation from the industrial turbine; and
removing the further component from the industrial turbine after another agreed maintenance cycle and providing the removed component to the maintenance provider, so that at least two consecutive maintenance cycles are realized.

3. The method according to claim 1, wherein the maintenance provider grants the customer a warranty for the component, the warranty being effective throughout the agreed maintenance cycle.

4. The method according to claim 1, wherein the maintenance cycle is defined by the furnishing of the component as a starting point and the removing of the component as an end point.

5. The method according to claim 1, wherein the maintenance provider charges the customer a flat rate covering all necessary repair and replacement expenses related to the component occurring during the agreed maintenance cycle.

6. The method according to claim 1, wherein the component is any one of a turbine vane, a turbine blade, a turbine bearing, a turbine valve, a turbine pipe, a combustion chamber heat shield, a compressor blade, a compressor bearing, a compressor valve, and a compressor pipe.

7. The method according to claim 1, wherein the maintenance provider is the Original Equipment Manufacturer of the component.

8. The method according to claim 1, wherein the component remains with the maintenance provider after each agreed maintenance cycle.

9. The method according to claim 1, wherein furnishing the component includes furnishing a plurality of components and wherein the plurality component includes any one of turbine vanes or turbine blades.

10. The method according to claim 9, wherein all turbine vanes respectively turbine blades installed at the industrial turbine are substituted by the furnished turbine vanes respectively turbine blades.

11. A method of maintaining the operational capability of an industrial owned by a customer, the method comprising:
furnishing at least one component of the customer-owned industrial turbine under the condition that the furnished component will be returned to the maintenance provider upon physical separation from the industrial turbine; and
removing the furnished component from the industrial turbine and providing the removed component to the maintenance provider after an agreed maintenance cycle,
wherein the property in the component is transferred to the maintenance provider.

12. The method according to claim 11, further comprising:
furnishing at least one further component of the industrial turbine under the condition that the furnished further component will be returned to the maintenance provider upon separation from the industrial turbine, and
removing the further component from the industrial turbine after another agreed maintenance cycle and providing the removed component to the maintenance provider,
wherein the property in the component is transferred to the maintenance provider, so that at least two consecutive maintenance cycles are realized.

13. The method according to claim 11, wherein the maintenance provider grants the customer a warranty related to component, the warranty being effective throughout the further agreed maintenance cycle.

14. The method according to claim 11, wherein the maintenance cycle is defined by the furnishing of the component as a starting point and the removing of the component as an end point.

15. The method according to claim 11, wherein the maintenance provider charges the customer a flat rate covering all necessary repair and replacement expenses related to the component occurring during the agreed maintenance cycle.

16. The method according to claim 11, wherein the component is any one of a turbine vane, a turbine blade, a turbine bearing, a turbine valve, a turbine pipe, a turbine transistor, a combustion chamber heat shield, a combustion chamber brick, a compressor blade, a compressor bearing, a compressor valve, and a compressor pipe.

17. The method according to claim 11, wherein the maintenance provider is the Original Equipment Manufacturer of the component.

18. The method according to claim 11, wherein the component keeps within the sphere of the maintenance provider after each agreed maintenance cycle.

19. The method according claim 11, wherein furnishing the component includes furnishing a plurality of components which equals the number of components of the same type which are installed at the industrial turbine.

20. A computer system for maintaining the operational capability of an industrial turbine owned by a customer, comprising:
a database related to the customer-owned industrial turbine including a first data record having technical information about the component and a second data record having information about a maintenance agreement between the customer and a maintenance provider, the maintenance agreement including that the furnished component is owned by the maintenance provider and will remain with the maintenance provider upon physical separation from the industrial turbine;
a first scheduling device for notifying the maintenance provider of due inspection dates based upon the maintenance agreement;
a second scheduling device for generating at least one equipment list which includes information about the number of components scheduled for inspection; and
input and output means for accessing the database and the first and second scheduling means,
wherein a number of components to be manufactured by the maintenance provider in advance of a due inspection date and a number of components to be removed by the maintenance provider after any agreed maintenance cycle is derived from the number of components scheduled for inspection.

21. The computer system as claimed in claim 20, wherein the maintenance agreement includes information about the number of agreed consecutive maintenance cycles and their respective duration.

22. The computer system as claimed in claim 20, wherein a client terminal is connected to a server via the Internet, wherein the server includes the database and the scheduling means and the client terminal includes the input and output means.
